# EUROPÄISCHE PATENTSCHRIFT

(11) **EP 1 475 648 B1**
(45) Veröffentlichungstag und Bekanntmachung des Hinweises auf die Patenterteilung: **25.10.2017**
(21) Anmeldenummer: 04100728.7
(22) Anmeldetag: 25.02.2004
(51) Int. Cl.: G01S 13/93, G08G 1/16, B60Q 1/48, B60Q 9/00, G01S 15/93

(54) **Einrichtung und Verfahren in Kraftfahrzeugen zur Vermessung von Parklücken**
Device and method to measure parking places for vehicle
Appareil et procédé de mesure de place de parking pour véhicule

(30) Priorität: 08.05.2003 DE 10320723
(43) Veröffentlichungstag der Anmeldung: 10.11.2004
(73) Patentinhaber: ROBERT BOSCH GMBH, 70442 Stuttgart (DE)
(72) Erfinder: Danz, Christian, 70469, Stuttgart (DE); Albrecht, Benno, 70839, Gerlingen (DE)

(56) Entgegenhaltungen:
- WO-A-03/087874
- DE-A- 19 616 447
- DE-A- 19 963 005
- DE-U- 20 105 340

## Beschreibung

Die Erfindung betrifft eine Messeinrichtung in Kraftfahrzeugen zur Vermessung von Parklücken mit berührungslosen Abstandssensoren, die zur Messung des Abstandes von seitlich vom Kraftfahrzeug befindlichen Objekten ausgerichtet sind, und mit einer Messsignalauswerteeinheit zur Bestimmung der Länge und der Breite einer Parklücke aus den Messsignalen der Abstandssensoren.

Die Erfindung betrifft weiterhin ein Verfahren zur Vermessung von Parklücken mit einer Messeinrichtung in Kraftfahrzeugen mit berührungslosen Abstandssensoren und einer Messsignalauswerteeinheit.

Aus der DE 101 29 136 A1 ist eine Einrichtung zur selbsttätigen Lenkung eines landwirtschaftlichen Arbeitsfahrzeugs bekannt, bei der ein Abtastsensor eine präzise selbsttätige Führung einer Landmaschine entlang einer Bearbeitungsgrenze ermöglicht. Der Abtastbereich des Abtastsensors wird in Abhängigkeit von einer Information gesteuert, aus der hervorgeht, auf welcher Seite des Arbeitsfahrzeugs sich die Bearbeitungsgrenze jeweils befindet. Damit wird erreicht, dass die Positionsdaten durch den Abtastsensor mit einer höheren Abtastrate aufgenommen werden können. Dies hat ein besseres Regelverhalten bei höheren Geschwindigkeiten zur Folgen. Als Abtastsensor werden optische Laserabtastsensoren, Kameras, Ultraschallsensoren oder kapazitive Sensoren vorgeschlagen.

In der DE 198 43 564 A1 ist eine Parkhilfe mit am Heck und ggf. an der Front eines Kraftfahrzeuges angeordneten Abstandssensoren beschrieben. Aus dem Abstand des Kraftfahrzeug zu einem Objekt, der relativen Geschwindigkeit des Objektes und des Fahrzeugs, der momentanen Fahrzeugverzögerung bzw. Beschleunigung und dem Lenkwinkel wird die Zeit bis zum Erreichen des Objektes ermittelt. Wenn die Zeit bis zum Erreichen des Objektes kleiner als ein Schwellwert zwischen 1,5 und 2 sek ist, wird ein Warnsignal ausgegeben.

Es ist weiterhin bekannt, mit einem automatischen Parklückenvermessungssystem die Parklückenlänge zwischen zwei parkenden Fahrzeugen elektronisch zu vermessen. Dabei erfassen Abstandssensoren bei der Vorbeifahrt des Kraftfahrzeugs das erste stehende Fahrzeug, dann die Länge der Parklücke und nachfolgend das zweite parkende Fahrzeug. Die ermittelte Länge der Parklücke oder die hieraus abgeleitete Information, ob das Kraftfahrzeug in die Parklücke passt oder nicht, wird dem Fahrer dann zur Verfügung gestellt.

Die Messintervallrate der Abtastsensoren ist dabei konstant und so gewählt, dass auch bei höheren Geschwindigkeiten eine ausreichende Genauigkeit bei der Ermittlung der Parklückenlänge erzielt wird. Dies hat jedoch den Nachteil, dass die maximal ermittelbare Tiefe der Parklücke erheblich reduziert ist.

Aus der nachveröffentlichten WO03/087874 A1 ist ein Einparkhilfesystem für Fahrzeuge bekannt, bei dem je nach Geschwindigkeit des Fahrzeugs während des Vorbeifahrens an einer Parklücke eine Messung mittels der Abstandsensoren in unterschiedlichen Zeitintervallen erfolgt. Hierbei wird bei langsamen Geschwindigkeiten in relativ kurzen Zeitintervallen gemessen. Bei einem raschen Vorbeifahren an der Parklücke wird die Messung in relativ großen Zeitintervallen erfolgen. Bei einer Geschwindigkeit des Fahrzeugs von mehr als 19 km/h sind Zeitintervalle von 20 Millisekunden vorgesehen, zwischen 10 und 19 km/h 40 Millisekunden und bei weniger als 10 km/h 100 Millisekunden.

Aufgabe der Erfindung ist es daher, eine verbesserte Messeinrichtung in Kraftfahrzeugen zur Vermessung von Parklücken zu schaffen, mit der sowohl eine hohe Auflösung der Parklückenlänge erreicht werden kann, als auch eine Vermessung relativ breiter Parklücken möglich ist.

Die Aufgabe wird mit der gattungsgemäßen Messeinrichtung erfindungsgemäß dadurch gelöst, dass die Messsignalauswerteeinheit mit einer Fahrzeuggeschwindigkeits-Messeinheit gekoppelt ist und die Messintervallrate der Abstandssensoren in Abhängigkeit von der Fahrzeuggeschwindigkeit gesteuert wird.

Auf diese Weise wird erreicht, dass beim Vorbeifahren eines Kraftfahrzeugs an einer Parklücke mit einer relativ hohen Geschwindigkeit, die hierbei wesentliche Information, nämlich die Länge der Parklücke, mit einer ausreichend hohen Auflösung bestimmt werden kann, indem die Messintervallrate entsprechend angepasst wird. Bei einer Vorbeifahrt mit geringerer Geschwindigkeit kann die gleiche Auflösung zur Ermittlung der Parklückenlänge bei einer geringeren Messintervallrate ebenfalls erzielt werden. Durch die Reduzierung der Messintervallrate wird dann ohne wesentlichen Verlust an Genauigkeit der Parklückenlänge der Wirkungsbereich der Abstandssensoren in der Tiefe erhöht. Damit ist sowohl eine Tiefenvermessung, als auch eine Längenvermessung mit ausreichender Messreichweite und Genauigkeit möglich. Zudem wird im niedrigen Geschwindigkeitsbereich die Anzahl der redundanten Messdaten reduziert, so dass der Speicherbedarf und Rechenaufwand vorteilhaft verringert wird.

Die berührungslosen Abstandssensoren sind vorzugsweise Ultraschallsensoren oder Radarsensoren, deren Messwerteauflösung und räumlicher Messbereich von der Messintervallrate abhängig ist. Die Reichweite dieser Abstandssensoren hängt stark von der Eigengeschwindigkeit des Kraftfahrzeugs ab, insbesondere von der Laufzeit des Reflexionssignals und der Zeit zur Ansteuerung der Abstandssensoren und Auswertung der Messsignale. Um eine größere Tiefe einer Parklücke erfassen zu können, ist daher eine größere Zeit zwischen zwei Messimpulsen erforderlich, d. h. eine Verringerung der Messintervallrate. Dies führt allerdings dazu, dass die Genauigkeit bei der Vermessung der Parklückenlänge während der Vorbeifahrt sinkt, da die Messung weniger oft stattfindet.

Es ist vorteilhaft, wenn die Messintervallrate proportional zur Fahrzeuggeschwindigkeit gesteuert wird.

Die Aufgabe wird weiterhin durch das gattungsgemäße Verfahren zur Vermessung von Parklücken mit einer Messeinrichtung in Kraftfahrzeugen gelöst durch die Schritte:
- Messen des seitlichen Abstandes von seitlich vom Kraftfahrzeug befindlichen Objekten zum Kraftfahrzeug, wobei die Messintervallrate der Abstandssensoren in Abhängigkeit von der Fahrzeuggeschwindigkeit gesteuert wird, und
- Bestimmen der Länge und Breite einer Parklücke aus den gemessenen seitlichen Abständen.

Die Erfindung wird nachfolgend anhand der beigefügten Zeichnungen beispielhaft erläutert. Es zeigen:
- Figur 1 -: Draufsicht auf eine Parklücke mit zwei im Abstand voneinander parkenden Fahrzeugen und mit einem an der Parklücke vorbeifahrenden Kraftfahrzeug mit einer herkömmlichen Parklückenvermessungseinrichtung;
- Figur 2 -: Skizze des erfindungsgemäßen Verfahren zur Vermessung von Parklücken mit in Abhängigkeit von der Fahrzeuggeschwindigkeit gesteuerten Messintervallraten für die Abstandssensoren;
- Figur 3 -: Skizze der Parklücke aus Figur 1 mit durch Verringerung der Messintervallrate erhöhter maximale Detektionsreichweite des Abstandssensors;
- Figur 4 -: Draufsicht auf ein Kraftfahrzeug mit Abstandssensoren für die Parklückenvermessung und Abstandssensoren für eine Einparkhilfe;
- Figur 5 -: Draufsicht auf das Kraftfahrzeug aus Figur 4 mit Messbereichen der Abstandssensoren.

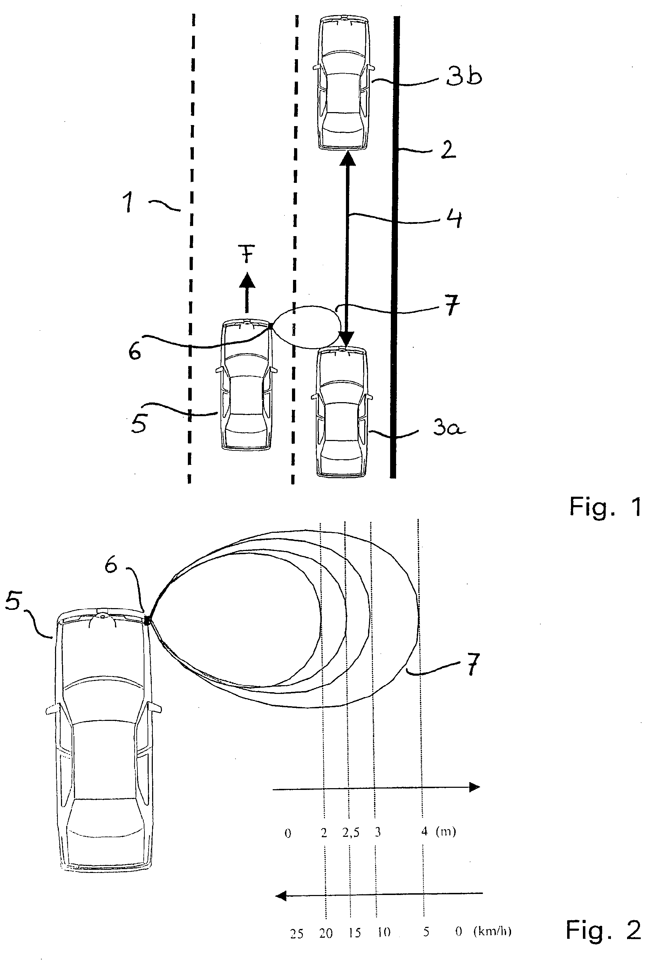

Die Figur 1 lässt eine Skizze eines Straßenabschnitts 1 mit zwei an einer Bordsteinkante 2 parkenden Fahrzeugen 3a, 3b erkennen. Ein mit einer herkömmlichen Messeinrichtung zur Vermessung von Parklücken 4 ausgerüstetes Kraftfahrzeug 5 hat im vorderen Bereichen einen Abstandssensor 6, der zur Vermessung des Abstandes des Kraftfahrzeuges 5 von seitlich vom Kraftfahrzeug befindlichen Objekten, wie beispielsweise parkenden Fahrzeugen 3, ausgerichtet ist. Der Erfassungsbereich 7 des Abstandssensors 6 ist fest eingestellt und so optimiert, dass auch einer definierten hohen Geschwindigkeit noch eine ausreichende Genauigkeit bei der Ermittlung der Parklückenlänge erzielt wird.

Die Figur 2 lässt die Skizze eines mit einer erfindungsgemäßen Parkl ückenvermessungseinrichtung ausgerüstetes Kraftfahrzeug 5 mit einem an der rechten Front angeordnetem Abstandssensor 6 erkennen. Die Messintervallrate, d. h. die Abtastrate des Abstandssensors, wird dabei in Abhängigkeit von der Geschwindigkeit so gesteuert, dass sie bei einer Zunahme der Fahrzeuggeschwindigkeit erhöht wird. Dies führt dazu, dass bei einer relativ hohen Geschwindigkeit von beispielsweise 20 km/h ein Erfassungsbereich 7 von etwa 2 m erzielt wird. Damit ist die Breite einer Parklücke in der Regel nicht mehr zu ermitteln. Durch die relativ hohe Messintervallrate wird jedoch eine hohe Auflösung bei der Bestimmung der Parklückenlänge erzielt. Bei einer relativ geringen Geschwindigkeit beispielsweise von 5 km/h erhöht sich der Erfassungsbereich 7 des Abstandssensors 6 auf etwa 4 m, so dass ein Vermessen der Tiefe der Parklücke möglich ist, um beispielsweise auch in der Parklücke stehende Motorräder oder andere offensichtliche Hindernisse, wie Bäume etc. erkennen zu können. Da die Genauigkeit bei der Ermittlung der Länge einer Parklücke sowohl von der Messintervallrate, als auch von der Fahrzeuggeschwindigkeit abhängig ist und bei gleicher Messintervallrate mit verringerter Fahrzeuggeschwindigkeit zunimmt, führt die Verringerung der Messintervallrate bei verringerter Geschwindigkeit nur zu einer vemachlässigbaren Änderung der Auflösung zur Parklängenermittlung.

Dabei ist zu verstehen, dass die Erfassungsbereiche 7 beispielsweise von Ultraschallsensoren als Abstandssensoren 6 von der Laufgeschwindigkeit des Schalls und weiteren Faktoren, wie die definierte Ansteuerung und Auswertung der Ultraschallsensoren etc. abhängt. Die Schalllaufzeit und die Zeiten zur definierten Ansteuerung und Auswertung der Ultraschallsensoren summieren sich, so dass z. B. bei einer Abtastzeit von ca. 25 ms nur ein Erfassungsbereich 7 von ca. 2m überdeckt werden kann.

Bei einer Abtastzeit von etwa 30 ms erhöht sich dieser Wert auf ca. 2,5 m. Bei einer Abtastzeit von 35 bis 45 ms kann ein Erfassungsbereich 7 von ca. 3 bis 4 m überwacht werden. Durch die Erhöhung der Abtastzeit sinkt allerdings auch die Abtastrate, was wiederum dazu führt, dass die Genauigkeit der Parklücken-Längenvermessung sinkt.

Mit der Steuerung der Messintervallrate in Abhängigkeit von der Fahrzeuggeschwindigkeit wird nunmehr eine Messung der Parklückenlänge bei hoher Geschwindigkeit mit ausreichender Genauigkeit und eine Messung der Parklückentiefe bis zu etwa 3 bis 4 m bei ausreichender Genauigkeit der Parklückenlängenerfassung gewährleistet. Dabei wird die Messintervallrate proportional zur Fahrzeuggeschwindigkeit gesteuert.

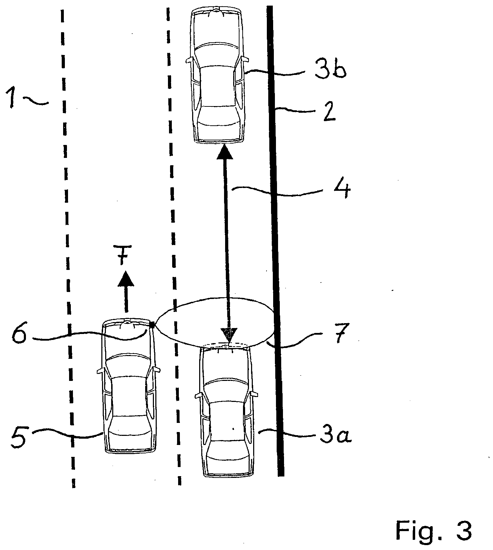

Die Figur 3 lässt eine Skizze einer Draufsicht auf eine Straße 1 mit zwei am Abstand voneinander parkenden Fahrzeugen 3a, 3b erkennen, wobei zwischen den beiden parkenden Fahrzeugen 3a, 3b eine Parklücke 4 ist. Wenn nun ein in Fahrtrichtung F an der Parklücke 4 vorbeifahrendes Kraftfahrzeug 5 an der Parklücke 4 vorbeifährt, erfasst der Abstandssensor 6 zunächst das in Fahrtrichtung gesehen vordere parkende Fahrzeug 3a. Dann wird die Länge der Parklücke 4 aus dem zurückgelegten Weg oder der Fahrzeuggeschwindigkeit und der Zeit ermittelt, bis das in Fahrtrichtung F gesehen hintere parkende Fahrzeug 3b erfasst wird. Die Messintervallrate wird dabei in Abhängigkeit von der Fahrzeuggeschwindigkeit so reduziert, dass die Erfassungstiefe 7 mindestens bis zur Bordsteinkante 2 reicht. Bei der Einstellung der Abhängigkeit zwischen Fahrzeuggeschwindigkeit und Messintervallrate muss ein Kompromiss zwischen hinreichender Genauigkeit der Parklückenlänge bei hohen Fahrzeuggeschwindigkeiten und mindestens notwendigen Erfassungstiefen 7 bei einer einzuhaltenden Mindestgeschwindigkeit gefunden werden. Die einzuhaltende Mindestgeschwindigkeit sollte dabei möglichst hoch sein, um auch bei schnellerer Vorbeifahrt eine Erfassung der Parklückentiefe zu ermöglichen. Die Einstellung des Verhältnisses zwischen Fahrzeuggeschwindigkeit und Messintervallrate ist abhängig von Art und Typ der verwendeten Abtastsensoren und kann vom Fachmann leicht optimiert werden.

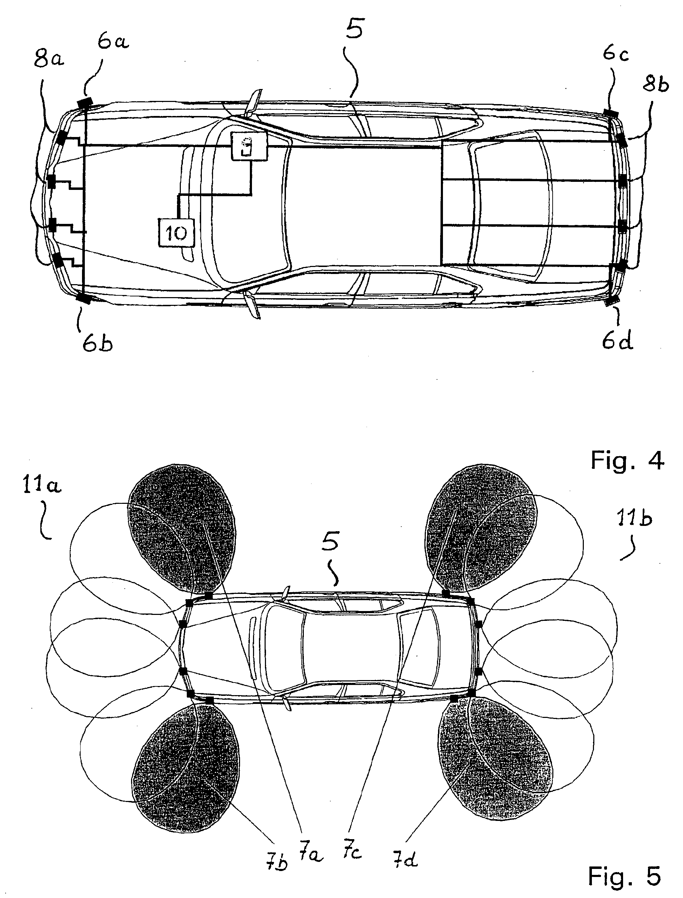

Die Figur 4 lässt eine Skizze eines Kraftfahrzeuges 5 in der Draufsicht erkennen, das mit berührungslosen Abstandssensoren 6a, 6b, 6c, 6d zur Vermessung von Parklücken ausgerüstet ist. Die Abstandssensoren 6a, 6b, 6c, 6d sind seitlich an der Front und dem Heck des Kraftfahrzeuges 5 angeordnet und so ausgerichtet, dass ihr Erfassungsbereich seitlich vom Kraftfahrzeug 5 befindliche Objekte erfasst.

Weiterhin sind Einparkhilfe-Abstandssensoren 8a, 8b an Front und Heck des Kraftfahrzeuges 5, vorzugsweise in die Stoßstangen des Kraftfahrzeuges 5 eingebaut.

Die Abstandssensoren 6a, 6b bzw., 6c und 6d können wahlweise entweder nur an der Front oder dem Heck des Kraftfahrzeuges 5 oder wie dargestellt sowohl an Front und Heck des Kraftfahrzeuges 5 eingebaut sein. Alternativ oder zusätzlich hierzu können Abstandssensoren 6 auch seitlich am Fahrzeug zwischen Front und Heck vorgesehen sein.

Die Abstandssensoren 6 sowie die Einparkhilfe-Abstandssensoren 8 sind mit einer Messsignalauswerteeinheit 9 verbunden, das neben der Erzeugung eines herkömmlichen Einparkhilfe-Warnsignals aus den Messsignalen der Abstandssensoren die Länge und Breite einer Parklücke 4 ermittelt. Hierzu wird die Laufzeit eines von einem Abstandssensor 6 abgegebenen Signals bis zum Empfangen eines reflektierten Anteils dieses Signals gemessen und hieraus der Abstand des die Reflexion verursachenden Objektes zu dem Kraftfahrzeug 5 berechnet. Die entsprechende Ermittlung eines Abstands aus dem Messsignal der Abstandssensoren 6 ist hinreichend bekannt.

Erfindungsgemäß ist die Messsignalauswerteeinheit 9 mit einer Fahrzeugsgeschwindigkeits-Messeinheit 10 gekoppelt, wobei die Messintervallrate der Abstandssensoren 6 in Abhängigkeit von der Fahrzeuggeschwindigkeit gesteuert wird.

Die Figur 5 lässt die Erfassungsbereich 7a, 7b, 7c, 7d der Abstandssensoren 6a, 6b, 6c, 6d für die Parklückenvermessung erkennen. Es wird deutlich, dass die Erfassungsbereiche 7 an Front und Heck des Kraftfahrzeuges 5 im Wesentlichen zur Seite ausgerichtet sind. Die Abstandssensoren 6c, 6d mit den zugehörigen Erfassungsbereichen 7c, 7d sind optional und zur Parklückenvermessung nicht unbedingt erforderlich.

Weiterhin sind die Erfassungsbereiche 11a, 11b der Einparkhilfe-Abstandssensoren 8a, 8b erkennbar, die im Wesentlichen in Längsrichtung des Kraftfahrzeuges 5 nach vorne und hinten ausgerichtet sind, um unmittelbar vor oder hinter dem Kraftfahrzeug 5 befindliche Hindernisse erkennen zu können.

Insbesondere die seitlichen Einparkhilfe-Abstandssensoren 8 können auch neben ihrer Funktion als Einparkhilfe zusätzlich zur Parklückenvermessung genutzt werden. Entsprechend können auch die Abstandssensoren 6 für die Parklückenvermessung gleichzeitig als Einparkhilfe-Abstandssensoren 8 eingesetzt werden.

## Patentansprüche (Patentansprüche für folgende(n) Vertragsstaat(en): AT, BE, BG, CH, CY, DK, EE? FI, GR, HU, IE, LI, LU, MC, NL, PT, RO, SE, SI, SK, TR)

1. Messeinrichtung in Kraftfahrzeugen (5) zur Vermessung von Parklücken (4) mit berührungslosen Abstandssensoren (6), die zur Messung des Abstandes von seitlich vom Kraftfahrzeug (5) befindlichen Objekten ausgerichtet sind, und mit einer Messsignalauswerteeinheit (9) zur Bestimmung der Länge und der Breite einer Parklücke (4) aus den Messsignalen der Abstandssensoren (6), wobei die Messsignalauswerteeinheit (9) mit einer Fahrzeuggeschwtndigkeits-Messeinheit (10) gekoppelt ist, **dadurch gekennzeichnet, dass** die Messintervallrate der Abstandssensoren (6) in Abhängigkeit von der Fahrzeuggeschwindigkeit gesteuert wird.

2. Messeinrichtung nach Anspruch 1, **dadurch gekennzeichnet, dass** die berührungslosen Abstandssensoren (6) Ultraschallsensoren oder Radarsensoren sind.

3. Messeinrichtung nach Anspruch 1 oder 2, **dadurch gekennzeichnet, dass** die Messintervallrate bei einer Zunahme der Fahrzeuggeschwindigkeit erhöht ist.

4. Messeinrichtung nach Anspruch 3, **dadurch gekennzeichnet, dass** die Messintervallrate proportional zur Fahrzeuggeschwindigkeit gesteuert wird.

5. Verfahren zur Vermessung von Parklücken (4) mit einer Messeinrichtung in Kraftfahrzeugen (5) mit berührungslosen Abstandssensoren (6) und einer Messsignalauswerteeinheit (9), **gekennzeichnet durch**
- Messen des seitlichen Abstandes von seitlich vom Kraftfahrzeug (5) befindlichen Objekten zum Kraftfahrzeug (5), wobei die Messintervallrate der Abstandssensoren (6) in Abhängigkeit von der Fahrzeuggeschwindigkeit gesteuert wird, und
- Bestimmen der Länge und Breite einer Parklücke (4) aus den gemessenen seitlichen Abständen.

6. Verfahren nach Anspruch 5, **gekennzeichnet durch** Erhöhen der Messintervallrate bei einer Zunahme der Fahrzeuggeschwindigkeit und Verringern der Messintervallrate bei einer Abnahme der Fahrzeuggeschwindigkeit.

7. Verfahren nach Anspruch 6, **gekennzeichnet durch** Steuern der Messintervallrate proportional zur Fahrzeuggeschwindigkeit.

## Patentansprüche (Patentansprüche für folgende(n) Vertragsstaat(en): DE, FR, GB, IT, ES)

1. Messeinrichtung in Kraftfahrzeugen (5) zur Vermessung von Parklücken (4) mit berührungslosen Abstandssensoren (6), die zur Messung des Abstandes von seitlich vom Kraftfahrzeug (5) befindlichen Objekten ausgerichtet sind, und mit einer Messsignalauswerteeinheit (9) zur Bestimmung der Länge und der Breite einer Parklücke (4) aus den Messsignalen der Abstandssensoren (6), wobei die Messsignalauswerteeinheit (9) mit einer Fahrzeuggeschwindigkeits-Messeinheit (10) gekoppelt ist und wobei die Messintervallrate der Abstandssensoren (6) in Abhängigkeit von der Fahrzeuggeschwindigkeit gesteuert wird, **dadurch gekennzeichnet, dass** die Messintervallrate roportional zur Fahrzeuggeschwindigkeit gesteuert wird.

2. Messeinrichtung nach Anspruch 1, **dadurch gekennzeichnet, dass** die berührungslosen Abstandssensoren (6) Ultraschallsensoren oder Radarsensoren sind.

3. Messeinrichtung nach Anspruch 1 oder 2, **dadurch gekennzeichnet, dass** die Messintervallrate bei einer Zunahme der Fahrzeuggeschwindigkeit erhöht ist.

4. Verfahren zur Vermessung von Parklücken (4) mit einer Messeinrichtung in Kraftfahrzeugen (5) mit berührungslosen Abstandssensoren (6) und einer Messsignalauswerteeinheit (9), mit einem
- Messen des seitlichen Abstandes von seitlich vom Kraftfahrzeug (5) befindlichen Objekten zum Kraftfahrzeug (5), wobei die Messintervallrate der Abstandssensoren (6) in Abhängigkeit von der Fahrzeuggeschwindigkeit proportional zur Fahrzeuggeschwindigkeit gesteuert wird, und
- Bestimmen der Länge und Breite einer Parklücke (4) aus den gemessenen seitlichen Abständen.

5. Verfahren nach Anspruch 4, **gekennzeichnet durch** Erhöhen der Messintervallrate bei einer Zunahme der Fahrzeuggeschwindigkeit und Verringern der Messintervallrate bei einer Abnahme der Fahrzeuggeschwindigkeit.

## Claims (Claims for the following Contracting State(s): AT, BE, BG, CH, CY, DK, EE? FI, GR, HU, IE, LI, LU, MC, NL, PT, RO, SE, SI, SK, TR)

1. Measuring device in motor vehicles (5) for measuring parking spaces (4), having contactless distance sensors (6), which are geared to measuring the distance from objects to the side of the motor vehicle (5), and having a measurement signal evaluation unit (9) for determining the length and the width of a parking space (4) from the measurement signals from the distance sensors (6), the measurement signal evaluation unit (9) being coupled to a vehicle speed measuring unit (10), **characterized in that** the measurement interval rate of the distance sensors (6) is controlled on the basis of the vehicle speed.

2. Measuring device according to Claim 1, **characterized in that** the contactless distance sensors (6) are ultrasonic sensors or radar sensors.

3. Measuring device according to Claim 1 or 2, **characterized in that** the measurement interval rate is increased if the vehicle speed increases.

4. Measuring device according to Claim 3, **characterized in that** the measurement interval rate is controlled in a manner proportional to the vehicle speed.

5. Method for measuring parking spaces (4) using a measuring device in motor vehicles (5) having contactless distance sensors (6) and a measurement signal evaluation unit (9), **characterized by**
- measurement of the lateral distance between objects to the side of the motor vehicle (5) and the motor vehicle (5), the measurement interval rate of the distance sensors (6) being controlled on the basis of the vehicle speed, and
- determination of the length and width of a parking space (4) from the measured lateral distances.

6. Method according to Claim 5, **characterized by** increasing the measurement interval rate if the vehicle speed increases and reducing the measurement interval rate if the vehicle speed decreases.

7. Method according to Claim 6, **characterized by** controlling the measurement interval rate in a manner proportional to the vehicle speed.

## Claims (Claims for the following Contracting State(s): DE, FR, GB, IT, ES)

1. Measuring device in motor vehicles (5) for measuring parking spaces (4), having contactless distance sensors (6), which are geared to measuring the distance from objects to the side of the motor vehicle (5), and having a measurement signal evaluation unit (9) for determining the length and the width of a parking space (4) from the measurement signals from the distance sensors (6), the measurement signal evaluation unit (9) being coupled to a vehicle speed measuring unit (10), and the measurement interval rate of the distance sensors (6) being controlled on the basis of the vehicle speed, **characterized in that** the measurement interval rate is controlled in a manner proportional to the vehicle speed.

2. Measuring device according to Claim 1, **characterized in that** the contactless distance sensors (6) are ultrasonic sensors or radar sensors.

3. Measuring device according to Claim 1 or 2, **characterized in that** the measurement interval rate is increased if the vehicle speed increases.

4. Method for measuring parking spaces (4) using a measuring device in motor vehicles (5) having contactless distance sensors (6) and a measurement signal evaluation unit (9), comprising
- measurement of the lateral distance between objects to the side of the motor vehicle (5) and the motor vehicle (5), the measurement interval rate of the distance sensors (6) being controlled in a manner proportional to the vehicle speed on the basis of the vehicle speed, and
- determination of the length and width of a parking space (4) from the measured lateral distances.

5. Method according to Claim 4, **characterized by** increasing the measurement interval rate if the vehicle speed increases and reducing the measurement interval rate if the vehicle speed decreases.

## Revendications (Revendications pour l'(les) Etat(s) contractant(s) suivant(s): AT, BE, BG, CH, CY, DK, EE? FI, GR, HU, IE, LI, LU, MC, NL, PT, RO, SE, SI, SK, TR)

1. Dispositif de mesure dans des véhicules automobiles (5) destiné au mesurage de places de stationnement (4), comprenant des capteurs de distance (6) sans contact qui sont conçus pour la mesure de la distance d'objets placés latéralement par rapport au véhicule automobile (5), et comprenant une unité d'interprétation de signaux de mesure (9) destinée à déterminer la longueur et la largeur d'une place de stationnement (4) à partir des signaux de mesure des capteurs de distance (6), l'unité d'interprétation de signaux de mesure (9) étant connectée à une unité de mesure de la vitesse du véhicule (10), **caractérisé en ce que** la fréquence des intervalles de mesure des capteurs de distance (6) est commandée en fonction de la vitesse du véhicule.

2. Dispositif de mesure selon la revendication 1, **caractérisé en ce que** les capteurs de distance (6) sans contact sont des capteurs à ultrasons ou des capteurs radar.

3. Dispositif de mesure selon la revendication 1 ou 2, **caractérisé en ce que** la fréquence des intervalles de mesure est accrue en présence d'une augmentation de la vitesse du véhicule.

4. Dispositif de mesure selon la revendication 3, **caractérisé en ce que** la fréquence des intervalles de mesure est commandée proportionnellement à la vitesse du véhicule.

5. Procédé de mesurage de places de stationnement (4) avec un dispositif de mesure dans des véhicules automobiles (5) comprenant des capteurs de distance (6) sans contact et une unité d'interprétation de signaux de mesure (9), **caractérisé par**
- la mesure de la distance latérale d'objets placés latéralement par rapport au véhicule automobile (5) jusqu'au véhicule automobile (5), la fréquence des intervalles de mesure des capteurs de distance (6) étant commandée en fonction de la vitesse du véhicule, et
- la détermination de la longueur et de la largeur d'une place de stationnement (4) à partir des distances latérales mesurées.

6. Procédé selon la revendication 5, **caractérisé par** l'accroissement de la fréquence des intervalles de mesure en présence d'une augmentation de la vitesse du véhicule et la diminution de la fréquence des intervalles de mesure en présence d'une baisse de la vitesse du véhicule.

7. Procédé selon la revendication 6, **caractérisé par** la commande de la fréquence des intervalles de mesure proportionnellement à la vitesse du véhicle.

## Revendications (Revendications pour l'(les) Etat(s) contractant(s) suivant(s): DE, FR, GB, IT, ES)

1. Dispositif de mesure dans des véhicules automobiles (5) destiné au mesurage de places de stationnement (4), comprenant des capteurs de distance (6) sans contact qui sont conçus pour la mesure de la distance d'objets placés latéralement par rapport au véhicule automobile (5), et comprenant une unité d'interprétation de signaux de mesure (9) destinée à déterminer la longueur et la largeur d'une place de stationnement (4) à partir des signaux de mesure des capteurs de distance (6), l'unité d'interprétation de signaux de mesure (9) étant connectée à une unité de mesure de la vitesse du véhicule (10), la fréquence des intervalles de mesure des capteurs de distance (6) étant commandée en fonction de la vitesse du véhicule, **caractérisé en ce que** la fréquence des intervalles de mesure des capteurs de distance est commandée proportionnellement à la vitesse du véhicule.

2. Dispositif de mesure selon la revendication 1, **caractérisé en ce que** les capteurs de distance (6) sans contact sont des capteurs à ultrasons ou des capteurs radar.

3. Dispositif de mesure selon la revendication 1 ou 2, **caractérisé en ce que** la fréquence des intervalles de mesure est accrue en présence d'une augmentation de la vitesse du véhicule.

4. Procédé de mesurage de places de stationnement (4) avec un dispositif de mesure dans des véhicules automobiles (5) comprenant des capteurs de distance (6) sans contact et une unité d'interprétation de signaux de mesure (9), comprenant les étapes suivantes
- mesure de la distance latérale d'objets placés latéralement par rapport au véhicule automobile (5) jusqu'au véhicule automobile (5), la fréquence des intervalles de mesure des capteurs de distance (6) étant commandée en fonction de la vitesse du véhicule proportionnellement à la vitesse du véhicule, et
- détermination de la longueur et de la largeur d'une place de stationnement (4) à partir des distances latérales mesurées.

5. Procédé selon la revendication 4, **caractérisé par** un accroissement de la fréquence des intervalles de mesure en présence d'une augmentation de la vitesse du véhicule et une diminution de la fréquence des intervalles de mesure en présence d'une baisse de la vitesse du véhicule.
